# EUROPÄISCHE PATENTANMELDUNG

(11) **EP 2 023 096 A1**
(43) Veröffentlichungstag der Anmeldung: **11.02.2009**
(21) Anmeldenummer: 08161863.9
(22) Anmeldetag: 05.08.2008
(51) Int. Cl.: G01F 15/00, G06M 3/12, G08B 13/14

(54) **Messgerät mit einer Plombierung und Verfahren zum Plombieren des Messgerätes für ein strömendes Medium**

(30) Priorität: 09.08.2007 EP 07114117
(71) Anmelder: GWF MessSysteme AG, 6002 Luzern (CH)
(72) Erfinder: Flückiger, Hans Walter, 8618, Oetwil am See (CH); Mettler, Roland, 6010, Kriens (CH)
(74) Vertreter: Blöchle, Hans

(57) **Zusammenfassung**

Bei diesem Messgerät für ein strömendes Medium wird eine Plombe (6) elektrisch überwacht. An einer Leiterplatte (9) mit elektronischen Schaltkreisen und Mikropozessor angeschlossene Drähte (10) bilden zusammen mit der Plombe (6) einen geschlossenen Stromkreis mit einem bestimmten elektrischen Widerstand. Beim Entfernen der Plombe (6) wird der Stromkreis unterbrochen, wobei der Unterbruch mittels der elektronischen Schaltkreise erfasst und an das Lieferwerk des strömenden Mediums weitergeleitet wird. Mit dem Entfernen der Plombe (6) aus einer Plombenhalterung (15) lösen sich gleichzeitig auch die mit der Plombe (6) verkeilten und unter Zug stehenden abisolierten Drahtenden (13) der Drähte (10). Als Folge davon zieht eine Schraubenfeder (12) die Drähte (10) ins Messgerät zurück.

## Beschreibung

Die Erfindung betrifft ein Messgerät mit einer Plombierung und ein Verfahren zum Plombieren des Messgerätes für ein strömendes Medium mit einem in einem Zählwerkgehäuse angeordneten Zählwerk und einem in einem Messwerkgehäuse angeordneten Messwerk, wobei das das Zählwerk antreibende Messwerk vom strömenden Medium in Bewegung versetzbar ist und wobei eine Plombierung vorgesehen ist, mittels der unerlaubte Eingriffe feststellbar sind gemäss der Definition der unabhängigen Patentansprüche.

Bei den bekannten Messgeräten für strömende Medien bzw. Energie wird den Verbrauchern von einem Lieferwerk das entsprechende Medium wie Gas, Wasser, Öl, Wärme, Elektrizität und dergleichen zugeführt. Mittels Mess- und Zählwerk des Messgerätes wird der jeweilige Verbrauch des strömenden Mediums bzw. der Energie des Abnehmers festgestellt und das Ergebnis im Anschluss an die Messung durch das Lieferwerk ausgelesen. Die Auslesung des Zählers kann dabei entweder durch das Personal des Lieferwerkes visuell vor Ort oder durch Fernauslesung vorgenommen werden.

Das mittels Zählwerk des Messgerätes gemessene Medium kann mit einer mechanischen oder elektronischen Anzeige erfolgen. Bei Volumenmessgeräten beispielsweise sind mechanische Anzeigen aus vielen Veröffentlichungen, aus Normen - z.B. aus EN 1359 - und aus der Praxis bekannt. Demgegenüber ist ein elektronisches Zählwerk beispielsweise mit der Schrift WO 2005/047828 A1 offenbart worden.

Um ein allfälliges Einwirken von Aussen auf das Messgerät, insbesondere auf das Zählwerk zu verhindern und einen einwandfreien Antrieb des Zählwerks zu gewährleisten, werden das Messgerät, insbesondere das Zählwerk und/oder die Anschlüsse des Messgerätes üblicherweise durch Plomben gesichert.

In den Ausführungsbeispielen ist ein Volumenmessgerät zur Messung von Gasen oder dergleichen gezeigt. Die erfindungsgemässe Einrichtung kann auch für andere Messgeräte verwendet werden, insbesondere für Messgeräte, die leitungsgebundene Medien wie Wärme, Gas, Wasser, Öl oder elektrische Energie messen und die die durchgeströmte, bzw. die gemessene Menge üblicherweise anzeigen und die von den Verbrauchern der Medien einsehbar sind.

In den bekannten Volumenmessgeräten mit mechanischem Zählwerk zur Messung von beispielsweise Gas, wird mit Hilfe eines Messwerks eine zum gemessenen Volumen proportionale Drehbewegung erzeugt, die mittels eines Getriebes auf ein Zählwerk übertragen wird. Dabei zeigen Zahlenrollen das gemessene Volumen an. Ein Rollenzählwerk für ein Messgerät für Wasser ist beispielsweise mit der Schrift DE 2 244 404 A1 offenbart worden. Das Zählwerk wird von einem Zählwerkunterteil, einem Schild und einer Schutzhaube umschlossen, wobei diese Elemente mechanisch miteinander zu einem Zählwerkgehäuse verbunden sind. Über eine metallene Grundplatte werden das Zählwerkunterteil und das Messwerk zum kompletten Volumenmessgerät verbunden.

Zum Schutz des mechanischen Zählwerks sowohl vor Staub und Feuchtigkeit als auch vor mechanischer Beschädigung ist vor dem Schild eine geschlossene, vollständig oder teilweise transparente Schutzhaube angebracht. Um ein allfälliges Einwirken auf das Zählwerk zu verhindern, werden die Schutzhaube und die Grundplatte üblicherweise mechanisch verbunden und durch eine Plombe zusätzlich gesichert. Das komplette Messgerät wird abschliessend über eine Anschlussverschraubung mit der Leitung verbunden, durch welche das Medium strömt.

Mechanische Zählwerke, die elektronisch auslesbar sind, weisen eine Elektronik auf, vorzugsweise eine Leiterplatte mit einem Mikroprozessor, mit welcher Elektronik der Zählerstand ausgelesen wird. Der ausgelesene Zählerstand kann in Form eines vordefinierten Protokolls an das Lieferwerk des strömenden Mediums weitergeleitet werden. Ein mechanisches Zählwerk, das sich zur elektronischen Auslesung eignet, ist beispielsweise mit der Schrift EP 0 660 263 B1 offenbart worden.

Bei Versorgungsnetzwerken mit vorwiegend elektronisch auslesbaren Zählern verwaltet beispielsweise ein Netzbetreiber, eine Netzagentur oder eine Verrechnungsgesellschaft die Daten aller Zähler und verteilt die Verbraucherdaten und die Verbrauchsdaten an die Lieferanten. Die Verbraucher haben so die Möglichkeit, den Lieferanten entsprechend der angebotenen Leistung zu wählen und/oder diesen nach Wunsch zu wechseln. Im weiteren Beschreibungsverlauf sind in der Bezeichnung "Lieferwerk" auch Netzbetreiber, Netzagenturen und Verrechnungsgesellschaften miteingeschlossen.

Ungeachtet der mechanischen Sicherungsmassnahmen mittels Plomben beim Einbau des Messgerätes kann nicht ausgeschlossen werden, dass unter besonderen Umständen das gemessene Volumen des durchgeströmten Mediums nicht dem tatsächlich durch das Volumenmessgerät geströmten Mediums entspricht. Dies beispielsweise dann, wenn das Messergebnis verfälschende Manipulationen am Messgerät oder bei der Verbindungsstelle zur Leitung des zu messenden Mediums, bzw. bei der Anschlussverschraubung vorgenommen werden. Wird beispielsweise das Messgerät von der Leitung des zu messenden Mediums entfernt bzw. überbrückt, so wird das Messergebnis verfälscht und die Sicherheit der Mediumsverteilung beinträchtigt. Auch mutwillige Manipulationen mit betrügerischen Absichten sind dabei lediglich bei einer visuellen Kontrolle feststellbar.

Der vorliegenden Erfindung liegt die Aufgabe zugrunde, eine Einrichtung und ein Verfahren zu schaffen, mittels der/dem das Messergebnis verfälschende Manipulationen an einem Messgeräte für strömende Medien automatisch erkennbar bzw. erfassbar sind.

Die gestellte Aufgabe wird durch die Erfindung gemäss den unabhängigen Patenansprüchen gelöst.

Die durch die Erfindung erreichten Vorteile sind hauptsächlich darin zu sehen, dass bei automatisch auslesbaren Zählern eine uneingeschränkte Überwachung der Plombierung bzw. der Fixierung des Messgerätes an der Leitung des strömenden Mediums möglich ist. Die elektronisch erfasste Entfernung von Plomben oder Entfernung bzw. Überbrückung von Messgeräten kann dann bei der elektronischen Auslesung des Zählwerkstandes oder als separate Meldung an das Lieferwerk des Mediums übertragen werden. Mit der automatisierten Überwachung können gegenüber der visuellen Kontrolle des Zählers Personal und Kosten gespart und bei mutwilligen Manipulationen bzw. bei einer Beeinträchtigung des Messergebnisses rasch Sofortmassnahmen ergriffen werden. Weiter kann durch die automatisierte Überwachung des Zählwerkstandes die Dauer der äusseren Beeinträchtigung exakt ermittelt werden, was wiederum zu einer verbesserten Kostengerechtigkeit und Kostentransparenz führt.

Die Überwachung der Plombe erfolgt mittels erfindungsgemässer Einrichtung dergestalt, dass bei Entfernung der Plombe mit der Plombe verbundene Drähte mechanisch mittels einer Federkraft ins Gehäuse zurückgezogen werden. Die an einer Leiterplatte im Innern des Zählwerkes angeschlossenen Drähte sind mit der Plombe derart verbunden, dass sie einen geschlossenen Stromkreis bilden. Durch die Trennung der Drähte von der Plombe wird der Stromkreis unterbrochen. Dieser Unterbruch kann in der Folge elektronisch dem Lieferwerk mitgeteilt werden.

Das Zählwerk weist eine Elektronik auf, vorzugsweise eine Leiterplatte mit einem Mikroprozessor, mittels welcher Elektronik der Zählwerkstand des Messgerätes auslesbar ist. Mittels dieser Leiterplatte können die durch eine Feder vorgespannten Drähte der erfindungsgemässen Einrichtung mit Strom versorgt werden. Gleichzeitig gewährleist dieser Aufbau einen Schutz vor äusseren Einwirkungen auf die Drähte bzw. auf die Schraubenfeder.

Als Material für die Drähte wird vorzugsweise isolierter Kupferdraht verwendet. Als Feder kommt bevorzugt eine metallische Schraubenfeder oder ein federndes Kunststoffelement in Betracht.

Im Ausführungsbeispiel sind an der Leiterplatte im Innern des Zählwerks des Volumenmessgerätes zwei Drähte angschlossen, welche parallel über entsprechende Führungselemente und durch die Öse einer Schraubenfeder bis zur Breitseite des Zählwerkunterteils verlaufen. Dort werden sie in einem ersten Schritt über eine Öffnung sowohl im Zählwerkgehäuse als auch in der Schutzhaube auf der Höhe der noch zu setzenden Sicherungsplombe aus der Schutzhaube herausgeführt. Wird in der Folge die Plombe gesetzt, werden die Drähte in einem zweiten Schritt so weit aus dem Gehäuse gezogen, bis die Schraubenfeder im Innern des Zählwerks eine Spannung erfährt. Dabei kommen die Drähte an Führungsrillen der Plombe zu liegen. Mit der mechanischen Verformung der Plombe verkeilen sich die Drähte, wobei sie trotz Federkraft der Schraubenfeder nicht ins Gehäuse des Zählwerks zurückschnellen. In einem dritten Schritt werden die überstehenden Drähte soweit gekürzt, dass sie an der Plombe nicht sichtbar sind.

Von der Leiterplatte des Zählwerks verlaufen die Drähte zur Plombe. Wird nun über die Leiterplatte an den Drähten eine Spannung angelegt, entsteht mittels Drähten und Plombe ein geschlossener Stromkreis, wobei der entstehende Widerstand an der Plombe vom Mikroprozessor ermittelt wird. Löst sich nach fachkundigem Einbau die Plombe aus ihrer Verankerung, lösen sich gleichzeitig auch die Drähte von der Plombe. Da die Drähte aufgrund der im Innern des Zählwerkgehäuses befestigten und gespannten Schraubenfeder unter Zug stehen, schnellen die Drähte infolge der Entspannung der Schraubenfeder ins Zählwerkgehäuse zurück, wobei der bis zum Entfernen der Plombe geschlossene Stromkreis unterbrochen bleibt. Die daraus resultierende Änderung des Widerstandes wird vom Mikroprozessor ausgelesen. Abschliessend wird der Unterbruch des Stromkreises beziehungsweise die Änderung des Widerstandes mittels Mikroprozessor an das Lieferwerk des Mediums übermittelt.

In einer weiteren Ausführung wird nur ein Draht durch die Schraubenfeder in das Gehäuse zurückgezogen.

In einer weiteren Ausführung werden an Stelle der Drähte Faserlichtleiter verwendet. Die Elektronik erzeugt ein optisches Signal, das mittels der Faserlichtleiter zur Plombe und von dieser wieder zurück zur Elektronik geführt wird, die das optische Signal wieder in ein elektrisches Signal umwandelt.

In einer weiteren Ausführungsvariante wird das Entfernen des Messgerätes von der Leitung des Mediums überwacht. Ein Hohlschlauch mit elektrischen Leitern verhindert die Drehung des Messgerätes im Gewinde der Anschlussverschraubung und verunmöglicht das Entfernen des Messgerätes von der Leitung des strömenden Mediums bzw. das Überbrücken des Messgerätes.

Die Einbaulage des Messgerätes wird mittels eines an einer Schutzhaube angeordneten Hohlschlauches gesichert, wobei der Hohlschlauch über eine Öffnung in der Anschlussverschraubung und um die Leitung des strömenden Mediums geführt ist. Im Anschluss daran wird das lose Ende des Schlauches über einen Stecker mit der Schutzhaube irreversibel verbunden. Dabei wird die Länge des Schlauches so gewählt, dass der Schlauch satt um die Leitung zu liegen kommt, was dazu führt, dass die Lage des Messgerätes, ohne Beschädigung des Schlauches, nicht mehr verändert werden kann.

Beim verwendeten Schlauch handelt es sich um einen Hohlschlauch in dessen Innern bevorzugt vier isolierte Kupferdrähte vorgesehen sind, wobei beispielsweise zwei der Drähte derart miteinander verbunden sind, dass sie einen geschlossenen Stromkreis bilden. Anstelle der Drähte können auch Lichtleiter verwendet werden.

Nach der irreversiblen Befestigung des Schlauchs und der Drähte mittels Stecker an der Schutzhaube wird mit Hilfe der Kupferdrähte und der Elektronik des Zählwerks eine erste Messung durchgeführt, bei welcher der Widerstand des Stromkreises gemessen wird. Das Messergebnis wird vom Mikroprozessor des Zählwerks ermittelt.

Um ein einwandfreies Funktionieren dieser erfindungsgemässen Einrichtung zu gewährleisten, ist beim Einbau des Hohlschlauches und der Drähte darauf zu achten, dass einerseits die Drähte, beispielsweise mittels einer Bride, fest mit dem Hohlschlauch und anderseits Drähte und Hohlschlauch dauerhaft mit dem Stecker verbunden sind. Eine dauerhafte Verbindung kann beispielsweise mittels Spritzgussverfahren garantiert werden.

Wird die Einbaulage des Messgerätes trotz Sicherung mittels Holhschlauch und Drähten verändert, wird die Drahtschlaufe und somit der überwachte Stromkreis unterbrochen. Der Unterbruch wird wiederum vom Mikroprozessor ermittelt und an das Lieferwerk des Mediums übermittelt.

Und selbst die vorsätzliche Verletzung der Drähte mit dem anschliessenden Versuch die Durchtrennung der Drähte wieder rückgängig zu machen, kann mit der erfindungsgemässen Einrichtung erfasst werden.

Die Elektronik des Zählwerks erkennt nicht nur den Drahtunterbruch, sondern sie prüft gleichzeitig, ob die richtigen Drähte miteinander verbunden sind. Die Wahrscheinlichkeit, dass nach dem Unterbruch der Drähte, ohne notwendiges Fachwissen, die zwei richtigen Drähte wieder miteinander verbunden werden können, erscheint in Anbetracht der Anzahl verwendeter Drähte, eher klein.

Anhand der beiliegenden Figuren werden die bevorzugten Ausführungsvarianten der vorliegenden Erfindung näher erläutert.

Es zeigen:
Fig. 1 eine Ansicht eines Zählwerkes eines Volumenmessgerätes für ein strömendes Medium,
Fig. 2a bis 2d das geöffnete Zählwerk gemäss Fig. 1 ohne Schutzhaube und ohne Schild mit der schrittweisen Montage und der Funktionsweise einer bevorzugten Ausführungsvariante, bei welcher mittels Drähten und Plombe ein Stromkreis aufgebaut wird, der bei Entfernung der Plombe unterbrochen wird und die Drähte mittels Schraubenfeder ins Innere des Zählwerkgehäuses zurückgezogen werden,

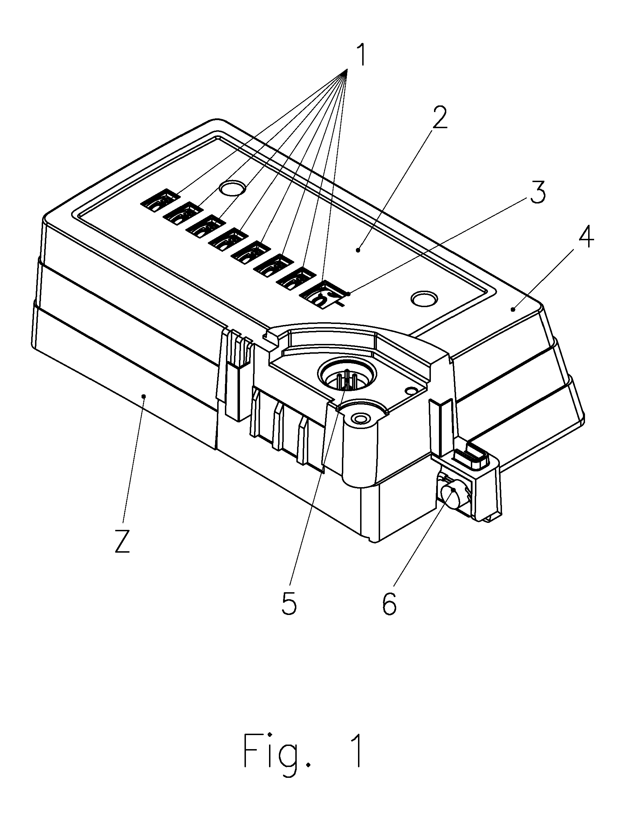

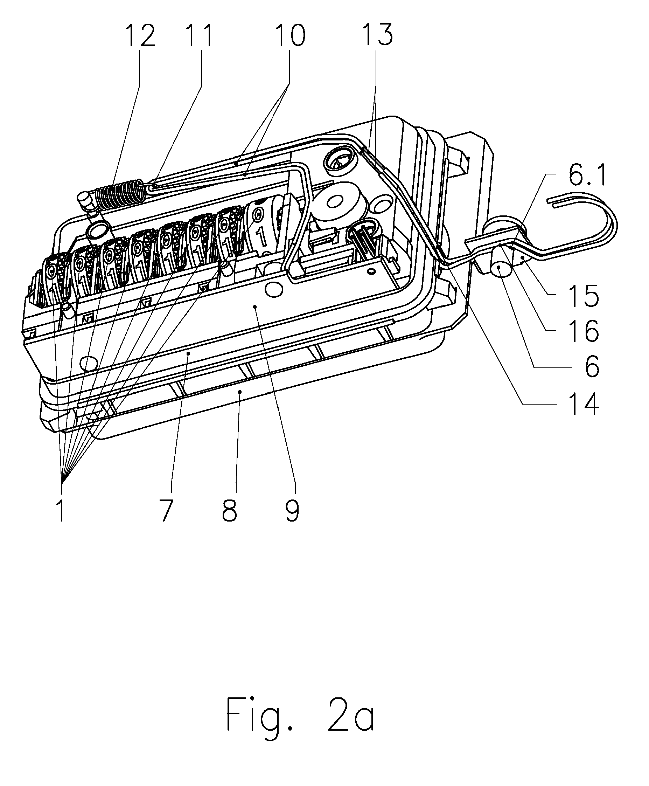

Fig. 2a das Zählwerk gemäss Fig. 1 mit entspannter Schraubenfeder und überstehenden Drähten,

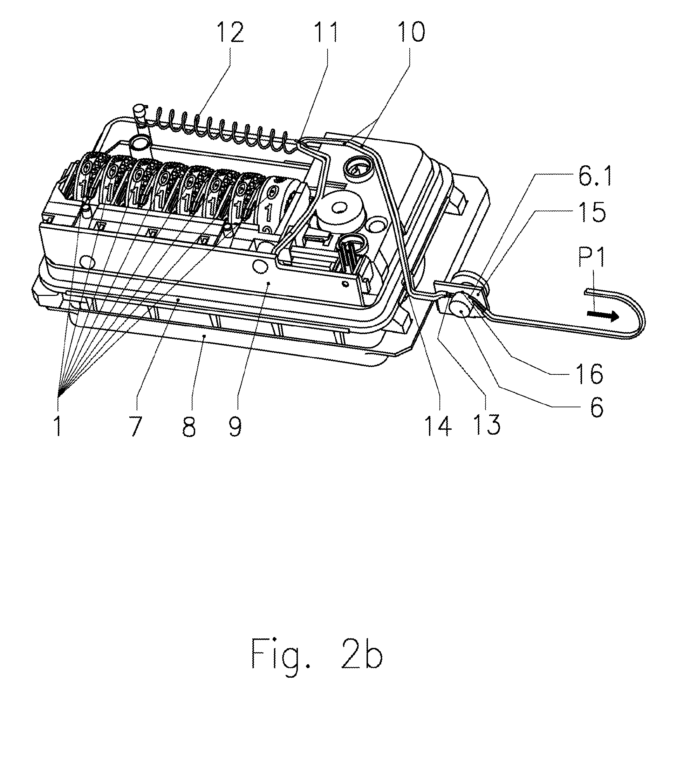

Fig. 2b das Zählwerk gemäss Fig. 2a mit gesetzter Plombe und gespannter Schraubenfeder und überstehenden Drähten,

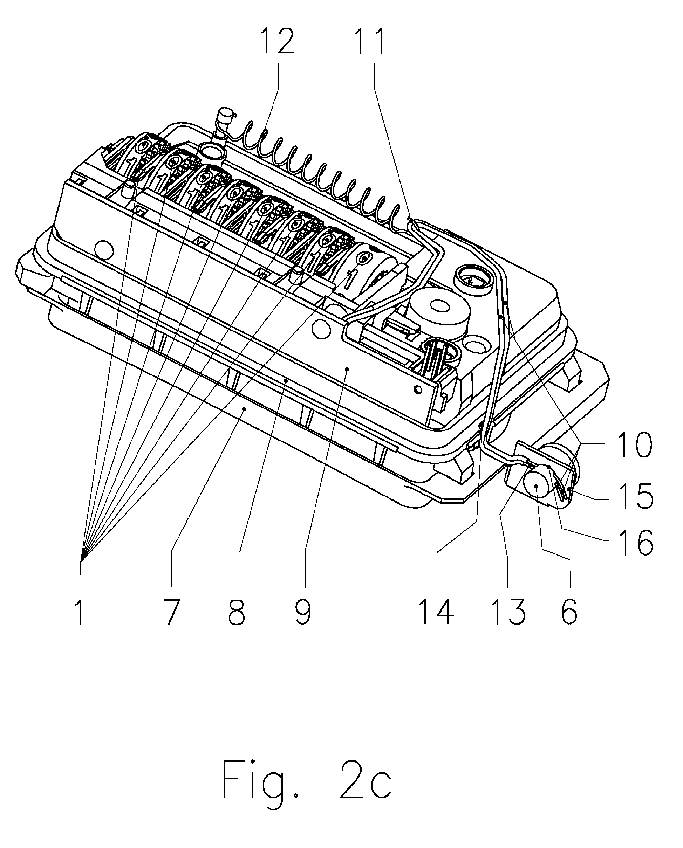

Fig. 2c das Zählwerk gemäss Fig. 2a mit gesetzter Plombe und gespannter Schraubenfeder und ohne überstehenden Drähten,

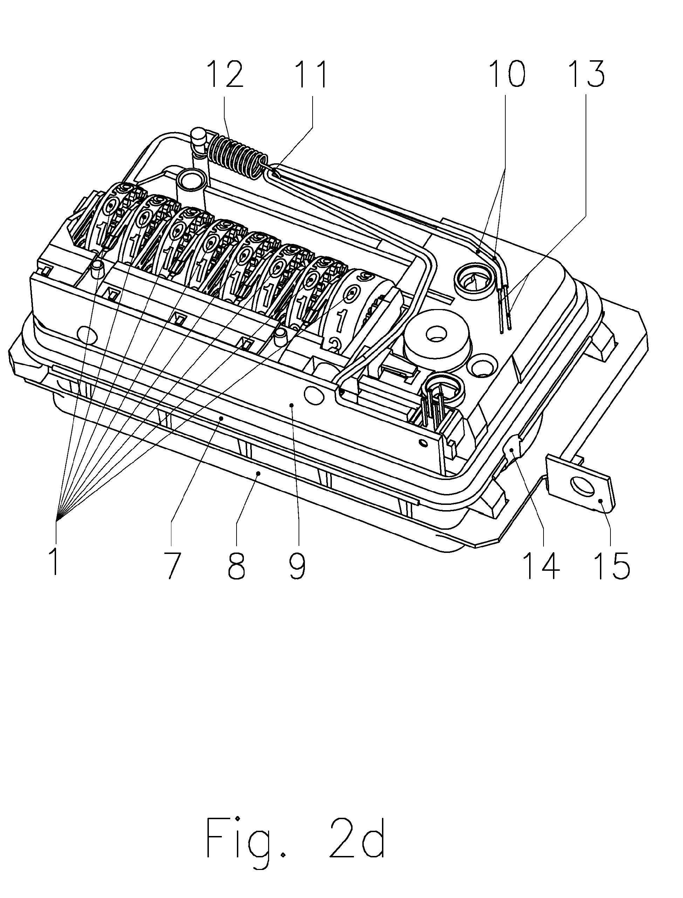

Fig. 2d das Zählwerk gemäss Fig. 2c mit entfernter Plombe und entspannter Schraubenfeder und ins Gehäuse zurückgezogenen Drähten,

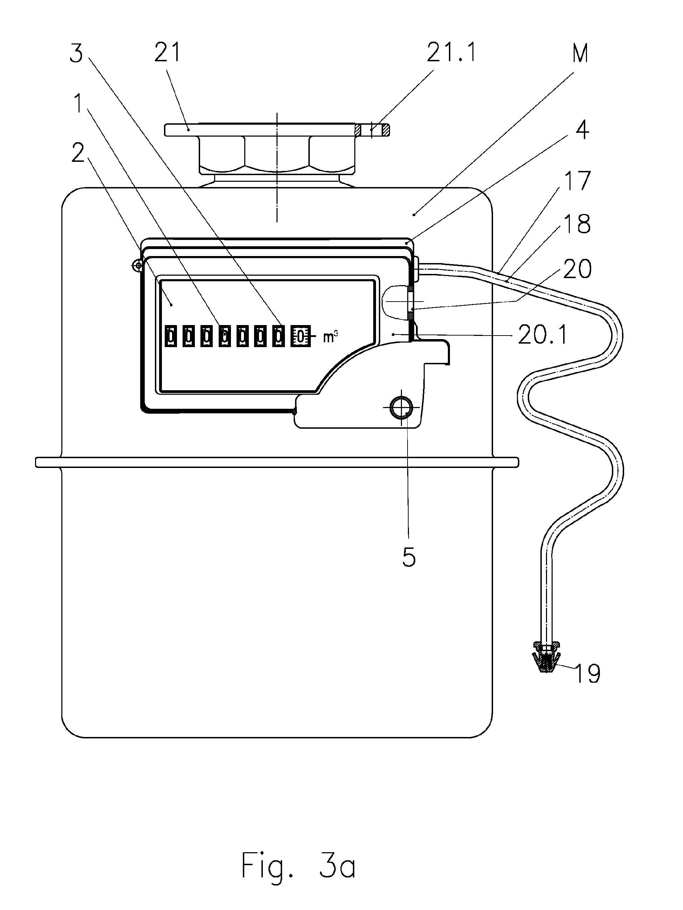

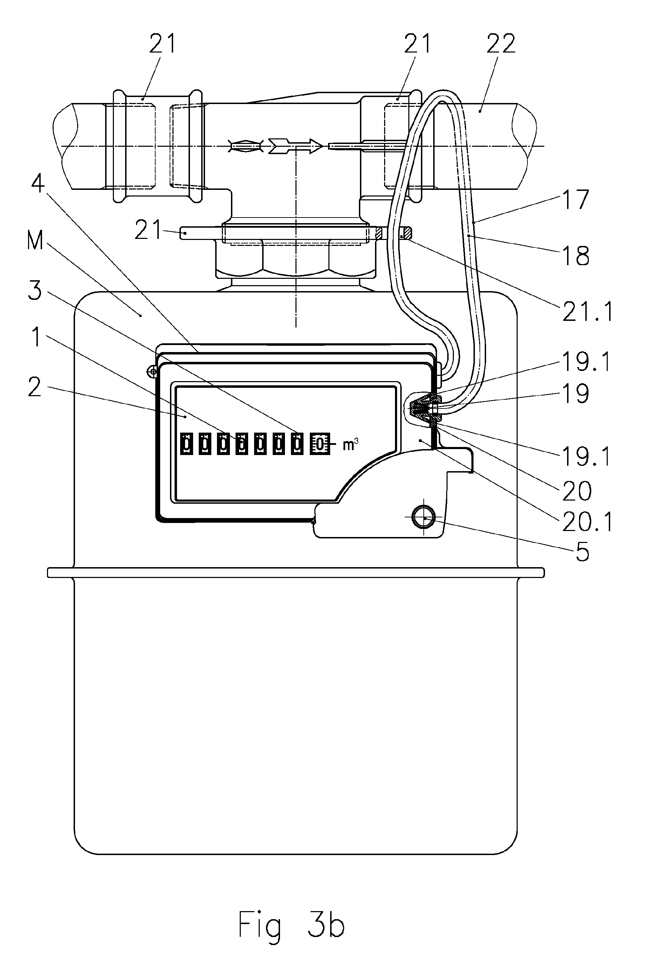

Fig. 3a und 3b eine Ansicht eines Volumenmessgerätes mit Messwerkgehäuse für ein strömendes Medium mit einer weiteren Ausführungsvariante, bei welcher die Einbaulage des Messgerätes mittels Hohlschlauch und Drähten gesichert wird,
Fig. 3a Das Volumenmessgerät gemäss Fig. 3 vor dem Einbau mit losem Hohlschlauch und Stecker,
Fig. 3b das Volumenmessgerät gemäss Fig. 3a nach dem Einbau, wobei die Einbaulage mittels Hohlschlauch gesichert wird, welcher durch eine Öffnung in der Anschlussverschraubung und um die Leitung eines Mediums geführt ist und dessen freies Ende mittels des Steckers unlösbar mit dem Zählwerk des Messgerätes verbunden ist und

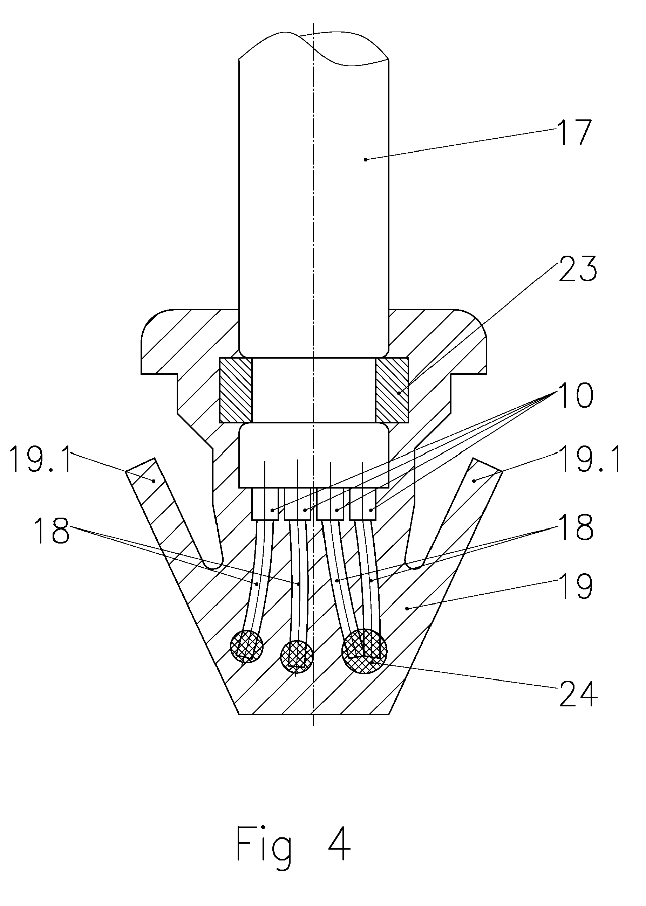

Fig. 4 Einzelheiten des Steckers gemäss Fig. 3a und 3b.

Fig. 1 zeigt ein Zählwerk Z eines Volumenmessgerätes für ein strömendes Medium wie beispielsweise Gas. Nicht dargestellt ist das Messwerk, welches das Zählwerk Z beispielsweise mit einer Kupplung und einem Getriebe antreibt. Das Messwerk ist mittels des strömenden Mediums in Bewegung versetzbar. Ein Messwerk mit Kupplung und Getriebe ist beispielsweise mit der Schrift EP 1 248 080 A1 offenbart worden.

Das Zählwerk Z besteht im wesentlichen aus einer Achse, auf welcher Zahlenrollen 1 drehbar angeordnet sind, wobei die niederwertigste Zahlenrolle über das Messwerk antreibbar ist. Das Zählwerk wird von einem Schild 2 umschlossen. Eine Blende 3 im Schild 2 macht den Zählerstand einsehbar. Der Schild 2 kann auch eine Beschriftung mit Daten des Zählers tragen. Das Zählwerk Z wird durch eine ganz oder teilweise transparente Schutzhaube 4 vor äusseren Einflüssen geschützt. In der Schutzhaube 4 ist zudem eine Aussparung 5 für den Anschluss der automatisierten Fernauslesung vorgesehen. Um Einwirkungen auf das Zählwerk Z zu verhindern, wird der Sitz der Schutzhaube 4 üblicherweise durch eine Plombe 6 gesichert. Das Messwerkgehäuse kann wie auch das Zählwerkgehäuse mittels einer Plombe 6 überwacht werden.

Fig. 2a zeigt das geöffnete Zählwerk Z gemäss Fig. 1. Das Zählwerk Z ist in einen Zählwerkunterteil 7 eingelassen, wobei das Unterteil 7 und das Messwerkgehäuse über eine metallene Grundplatte 8 verbunden sind.

Zur elektronischen Auslesung des Zählerstandes weist das Zählwerk eine Elektronik auf, vorzugsweise eine Leiterplatte 9 mit einem Mikroprozessor, mit welcher der Zählwerkstand auslesbar ist. Die zur elektronischen Auslesung des Zählwerkstandes notwendige Einrichtung ist beispielsweise mit der Schrift EP 0 660 263 B1 offenbart worden.

In einem ersten Montageschritt der erfindungsgemässen Einrichtung werden an der Leiterplatte 9 des Zählwerks Z zwei Drähte 10 angeordnet, die durch eine Öse 11 einer Schraubenfeder 12 geführt sind und an der Breitseite des Zählwerkunterteils verlegt sind. Diese Drähte 10 sind dabei nicht auf ihrer ganzen Länge isoliert, vielmehr ist bei einem Teilstück 13 die Ummantelung entfernt worden. Das abisolierte Teilstück 13 der Drähte 10 ist im vorliegenden Montageschritt noch innerhalb des Zählwerkgehäuses.

Durch eine Öffnung 14 im Zählwerkunterteil 7 werden die Drähte 10 auf der Höhe einer Plombenhalterung 15 aus der Schutzhaube 4 herausgeführt. An dieser Plombenhalterung 15 wird eine Plombe 6 angeordnet, die üblicherweise die Schutzhaube 4 und die Grundplatte 8 zusätzlich verbindet und sichert bzw. überwacht. Die beiden Drähte 10 sind in Fig. 2a noch nicht gespannt, weshalb die Schraubenfeder 12 noch gänzlich entspannt ist. Zur Vorbereitung des nächsten Schrittes sind die beiden Drähte 10 in eine Führungsrille 6.1 der Plombe 6 eingeführt.

Fig. 2b zeigt das geöffnete Zählwerk gemäss Fig. 2a in einem nächsten Montageschritt. Dabei werden die beiden Drähte 10, nach der Anordnung der Plombe 6 in der Plombenhalterung 15, so weit aus dem Gehäuse gezogen, bis die Schraubenfeder 12 im Innern des Zählwerks gespannt ist. Der Ausziehvorgang ist mit einem ersten Pfeil P1 symbolisiert. Die Drähte 10 verlaufen auch nach der Spannung der Schraubenfeder 12 noch immer in der Führungsrille der Plombe 6. Die Drähte 10 sind nun soweit aus dem Zählwerkgehäuse herausgezogen, dass die abisolierten Teilstücke 13 mit der Plombe 6 in Kontakt sind. Wird nun mittels Plombenzange die Plombe 6 verpresst, kommt es aufgrund der daraus resultierenden mechanischen Verformung der Plombe 6 zu einer Verkeilung der Drähte 10 mit der Plombe 6. In der Folge können die Drähte 10 trotz Zugsspannung seitens der Schraubenfeder 12 nicht mehr ins Zählwerkgehäuse zurückschnellen. In diesem Montageschritt sind die Drähte 10 noch überstehend und gut sichtbar.

Fig. 2c zeigt das geöffnete Zählwerk gemäss Fig. 2b im letzten Montageschritt der erfindungsgemässen Einrichtung. Dabei werden die mit der Plombe 6 verkeilten Drähte 10 abgeschnitten, wobei sie an der Plombe 6 nicht mehr sichtbar sind. Im Anschluss an die Installation der Drähte 10 und der Plombe 6 werden die Drähte 10 mittels der Leiterplatte 9 mit Strom beaufschlagt. Dadurch entsteht mittels der abisolierten Teilstücke 13 der Drähte 10 und mittels der Plombe 6 ein geschlossener Stromkreis, wobei der elektrische Widerstand des Stromkreises vom Mikroprozessor der Leiterplatte 9 ermittelt wird. An der Plombe 6 kann beispielsweise auch ein an die Drähte angeschlossener, elektrischer Widerstand mit einem bestimmten Widerstandswert vorgesehen sein.

Fig. 2d zeigt das geöffnete Zählwerk gemäss Fig. 2c nach dem Entfernen der Plombe 6 aus ihrer Halterung 15. Mit dem Entfernen der Plombe 6 aus der Plombenhalterung 15 lösen sich gleichzeitig auch die mit der Plombe 6 verkeilten und unter Zug stehenden Drähte 10. Als Folge davon zieht die Schraubenfeder 12 die Drähte 10 ins Zählwerk zurück. Mit dem Entfernen der Plombe 6 wird der bis anhin geschlossene Stromkreis unterbrochen. Die daraus resultierende Widerstandsänderung wird wiederum vom Mikroprozessor auf der Leiterplatte 9 erfasst. Abschliessend wird der Unterbruch des Stromkreises beziehungsweise die Änderung des Widerstandes mittels Mikroprozessor an das Lieferwerk des Mediums übermittelt.

An Stelle der Drähte 10 können auch Lichtleiter verwendet werden, deren Unterbruch analog zum Unterbruch der Drähte 10 detektiert wird. Die Elektronik erzeugt ein optisches Signal, das mittels der Lichtleiter zur Plombe und von dieser wieder zurück zur Elektronik geführt wird, die das optische Signal wieder in ein elektrisches Signal umwandelt.

Fig. 3a zeigt eine weitere Ausführungsvariante eines Volumenmessgerätes für ein strömendes Medium, wobei die Einbaulage des Messgerätes mittels Hohlschlauch und Drähten überwacht wird. Dabei wird der Hohlschlauch 17 an der Schutzhaube 4 des Zählwerks oder am Messwerkgehäuse M angeordnet, wobei im Hohlschlauch 17 bevorzugt vier isolierte Kupferdrähte 18 vorgesehen sind. Anstelle der Kupferdrähte ist auch die Verwendung von Lichtleitern denkbar. Am losen Ende des Schlauchs ist ein Stecker 19 angeordnet, der durch eine Aussparung 20 an einer Schutzhaube 20.1 unlösbar mit dieser verbindbar ist. Eine Anschlussverschraubung 21 ist zudem mit einer Öffnung 21.1 versehen.

Fig. 3b zeigt das Volumenmessgerät gemäss Fig. 3a in einem nächsten Montageschritt. Dabei wird der bis anhin lose Hohlschlauch 17 durch die Öffnung 21.1 der Anschlussverschraubung 21 und um die Leitung 22 des strömenden Mediums geführt. Danach wird der Hohlschlauch 17 mittels Stecker 19 in der Aussparung 20 der Schutzhaube 20.1 unlösbar verankert, wobei Widerhaken 19.1 mit der Aussparung 20 verrasten. Die Länge des Hohlschlauches 17 ist bevorzugt so zu wählen, dass der Hohlschlauch 17 satt um die Leitung 22 des Mediums legbar ist. Dadurch ist eine Änderung der Einbaulage ohne Beschädigung des Hohlschlauches 17 nicht möglich.

Die Anschlussverschraubungen 21 verbinden das Messgerät mit der Leitung mittels eines Einrohranschlussstückes (mono pipe fitting), welches das strömende Medium von der Leitung zum Messwerk und vom Messwerk wieder zur Leitung 22 führt. Der am Einrohranschlussstück angeordnete Pfeil symbolisiert die Strömungsrichtung des Mediums, bzw. den Eingang und Ausgang des Einrohranschlussstückes.

Fig. 4 zeigt Einzelheiten des am Ende des Hohlschlauches 17 angeordneten Steckers 19. Der Hohlschlauch 17 und beispielsweise vier im Hohlschlauch 17 angeordnete, isolierte Kupferdrähte 10 sind mittels einer Bride 23 fest miteinander verbunden. Dadurch wird vermieden, dass die Drähte 10 einzeln aus dem Hohlschlauch 17 herausgezogen werden können. Ausserdem müssen der Hohlschlauch 17 und auch die abisolierten Enden 18 bzw. die Leiter 18 der isolierten Drähte 10 fest im Stecker 19 verankert sein. Dies kann beispielsweise durch die Fertigung des Steckers 19 mittels Spritzgusstechnik erreicht werden.

Zwei Leiter 18 werden an den Enden miteinander verbunden, wobei die beispiesweise als Lötstelle ausgebildete Verbindungsstelle 24 auch im Stecker 19 eingegossen wird. Der Widerstand der an der Lötstelle 24 verbundenen Leiter 18 wird in der Folge von der Elektronik der Leiterplatte gemessen und an das Lieferwerk des Mediums weitergeleitet.

Kommt es aufgrund einer Verletzung der Drähte 10 in der Folge zu einem Unterbruch des Stromkreises, kann die daraus folgende Änderung des Widerstandes wiederum vom Mikroprozessor bzw. von der Elektronik der Leiterplatte ausgelesen und dem Lieferwerk des Mediums weitergeleitet werden.

Manipulationen am Hohlschlauch 17, die zu einer Verletzung der Drähte 10 und zu einem Unterbruch des andauernd elektrisch überwachten Stromkreises führen, sind jederzeit im Lieferwerk des Mediums erkennbar. Im gravierensten Fall ist die Einbaulage des Volumenmessgerätes verändert worden oder das Volumenmessgerät überbrückt worden.

Und selbst eine vorsätzliche Verletzung der Drähte, beispielsweise infolge einer bezweckten Trennung des Messgerätes von der Leitung des Messgerätes, kann mit der erfindungsgemässen Einrichtung erfasst werden.

Die Elektronik zusammen mit dem Mikroprozessor des Zählwerks erkennt nicht nur die Beschädigung der Drähte 10, sondern sie prüft gleichzeitig, ob die richtigen Drähte 10 bzw. die richtigen Leiter 18 miteinander verbunden sind. Die Wahrscheinlichkeit, dass nach der Durchtrennung der Drähte 10, die beiden für den elektrischen Stromkreis verwendeten Drähte wieder miteinander verbunden werden, erscheint abhängig von der Anzahl verwendeter Drähte, eher klein.

## Patentansprüche

1. Messgerät für ein strömendes Medium mit einem in einem Zählwerkgehäuse (4,7,8) angeordneten Zählwerk (Z) und einem in einem Messwerkgehäuse (M) angeordneten Messwerk, wobei das das Zählwerk (Z) antreibende Messwerk vom strömenden Medium in Bewegung versetzbar ist und wobei eine Plombierung (6,17) vorgesehen ist, mittels der unerlaubte Eingriffe feststellbar sind,
**dadurch gekennzeichnet,**
**dass** die Plombierung einen geschlossenen Kreis (6,10,17) mit Signalleitern (10) aufweist, wobei der Kreis (6,10,17) elektronisch überwachbar ist.

2. Messgerät nach Anspruch 1,
**dadurch gekennzeichnet,**
**dass** die Plombierung eine am Zählwerkgehäuse (4,7,8) oder am Messwerkgehäuse (M) angeordnete Plombe (6) aufweist, die Teil des geschlossenen Kreises ist und die die Signalleiter (10) verbindet.

3. Messgerät nach einem der Ansprüche 1 oder 2,
**dadurch gekennzeichnet,**
**dass** im Innern des Gehäuses ein Kraftspeicher (12) vorgesehen ist, der die Signalleiter (10) mit einer Zugkraft beaufschlagt, die die Signalleiter (10) beim Entfernen der Plombe (6) ins Gehäuse zurückzieht.

4. Messgerät nach einem der Ansprüche 1 bis 3,
**dadurch gekennzeichnet,**
**dass** elektrische oder optische Signalleiter (10) vorgesehen sind.

5. Messgerät nach Anspruch 1,
**dadurch gekennzeichnet,**
**dass** die Plombierung einen einenends am Zählwerkgehäuse (4,7,8) oder am Messwerkgehäuse (M) angeordneten Schlauch (17) mit Signalleitern (10) aufweist und der Schlauch (17) anderenends einen Stecker (19) aufweist, in dem die Enden von einen geschlossenen, elektronisch überwachbaren Kreis bildenden Signalleitern (10) verbunden sind.

6. Messgerät nach Anspruch 5,
**dadurch gekennzeichnet,**
**dass** der Schlauch (17) durch eine Öffnung (21.1) einer Anschlussverschraubung (21) und um die Leitung (22) des strömenden Mediums geführt ist und der Stecker (19) in einer Aussparung (20) des Gehäuses unlösbar verbunden ist.

7. Messgerät nach einem der Ansprüche 5 oder 6,
**dadurch gekennzeichnet,**
**dass** elektrische oder optische Signalleiter (10) vorgesehen sind.

8. Verfahren zum Plombieren eines Messgerätes für ein strömendes Medium mit einem in einem Zählwerkgehäuse (4,7,8) angeordneten Zählwerk (Z) und einem in einem Messwerkgehäuse (M) angeordneten Messwerk, wobei das das Zählwerk (Z) antreibende Messwerk vom strömenden Medium bewegt wird,
**dadurch gekennzeichnet,**
**dass** im Zählwerkgehäuse (4,7,8) oder im Messwerkgehäuse Signalleiter (10) mit einer Federkraft beaufschlagt werden und die einen Enden der Signalleiter (10) aus dem Zählwerkgehäuse (4,7,8) oder aus dem Messwerkgehäuse geführt werden und mit einer Plombe (6) verbunden werden, wobei Signalleiter (10) und Plombe (6) einen geschlossenen und elektronisch überwachbaren Kreis bilden und beim Lösen der Signalleiter (10) von der Plombe (6) die Signalleiter (10) mittels der Federkraft in das Gehäuse gezogen werden.

9. Verfahren nach Anspruch 8,
**dadurch** gekenzeichnet,
dass die Signalleiter (10) einenends mit einer Leiterplatte (9) verbunden werden und die freien Enden der Signalleiter (10) durch eine Öse (11) einer im Messgerät angeordneten Feder (12) und an einer Öffnung (14) aus dem Messgerät geführt werden bis die Feder (12) gespannt ist und dass die durch die Feder (12) vorgespannten Signalleiter (10) mit der Plombe (6) verbunden werden.
